# EUROPÄISCHE PATENTSCHRIFT

(11) **EP 0 797 848 B1**
(45) Veröffentlichungstag und Bekanntmachung des Hinweises auf die Patenterteilung: **31.03.1999**
(21) Anmeldenummer: 95940151.4
(22) Anmeldetag: 05.12.1995
(51) Int. Cl.: H01M 8/24, H01M 8/02

(54) **PEM-BRENNSTOFFZELLE MIT STRUKTURIERTEN PLATTEN**
PEM FUEL CELL WITH STRUCTURED PLATES
PILE A COMBUSTIBLE A MEMBRANE ELECTROLYTIQUE POLYMERE A PLAQUES STRUCTUREES

(30) Priorität: 09.12.1994 DE 4443939
(43) Veröffentlichungstag der Anmeldung: 01.10.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: LEDJEFF-HEY, Konstantin, Prof. Dr., D-79379 Müllheim (DE); NOLTE, Roland, D-79211 Denzlingen (DE)
(74) Vertreter: Pfenning, Meinig & Partner
(86) Internationale Anmeldenummer: DE9501751
(87) Internationale Veröffentlichungsnummer: WO9618217

(56) Entgegenhaltungen:
- EP-A- 0 198 483
- EP-A- 0 482 783
- WO-A-94/05051
- DE-A- 1 814 702
- DE-A- 4 329 819
- FR-A- 1 452 564
- GB-A- 2 286 482
- PATENT ABSTRACTS OF JAPAN vol. 016 no. 535 (E-1288) ,5.November 1992 & JP,A,04 206162 (MITSUBISHI HEAVY IND LTD) 28.Juli 1992,
- PATENT ABSTRACTS OF JAPAN vol. 017 no. 334 (E-1387) ,24.Juni 1993 & JP,A,05 041221 (MITSUBISHI HEAVY IND LTD) 19.Februar 1993,
- PATENT ABSTRACTS OF JAPAN vol. 010 no. 306 (E-446) ,17.Oktober 1986 & JP,A,61 121265 (MITSUBISHI ELECTRIC CORP) 9.Juni 1986,

## Beschreibung

Die Erfindung betrifft ein PEM-Brennstoffzelle, die aus Streifenmembranen und beidseitig an die Membrane kontaktierte Platten besteht, wobei die Platten leitfähige und nichtleitfähige Bezirke aufweisen.

PEM-Brennstoffzellen (Polymer Electrolyte Membrane-Brennstoffzellen) sind elektrochemische Zellen, die vereinfachend aus Anode, Kathode und dazwischenliegendem polymeren Festelektrolyten bestehen. Zum Betrieb derartiger Zellen werden an beide Elektroden von außen laufend Brennstoffe herangeführt, die dort elektrochemisch umgesetzt werden, so daß an den Elektroden eine Spannung abgegriffen werden kann. Es ist nun aber unmöglich, die gesamte zugeführte chemische Energie umzuwandeln. Stets geht beim Betrieb der Brennstoffzelle ein gewisser Anteil als Wärme verloren. Insbesondere Brennstoffzellen mit höherer Leistung erfordern deshalb Maßnahmen zur Wärmeabfuhr. Dies erfolgt nach dem Stand der Technik durch elektrisch leitfähige Wärmeaustauscherplatten, die von einer Kühlflüssigkeit durchströmt werden (Literatur: A.J. Appley, E.B. Yeager, Energy 11, 137-152 [1986]).

Dabei stehen beide Seiten der Membran-Elektroden-Einheit mit den elektrisch leitfähigen Platten in Kontakt, wobei zum Erreichen der Zelldichtigkeit dazwischenliegende Dichtungsringe verwendet werden. Die leitfähigen Platten sind als Wärmeaustauscher konzipiert, d.h. sie enthalten Kanäle durch die eine Kühlflüssigkeit strömt. Die Kühlflüssigkeit wird dabei über in der Platte vorhandene Öffnungen ein- und ausgespeist. Des weiteren sind in den elektrisch leitfähigen Platten Zu- und Abfuhrkanäle für die Brennstoffe integriert, wobei die Brennstoffe dann über geeignete Strukturen an die Elektroden herangeführt werden. Für einen solchen Brennstoffzellenaufbau nach Stand der Technik ist es nun aber notwendig, daß die Platten aus elektrisch leitfähigem Material bestehen, da jede Platte auf die jeweilige Elektrodenfläche drücken muß, um den elektrischen Anschluß der Zelle nach außen darzustellen. Im Falle einer Stackbauweise können die Platten auch als bipolare Platten ausgeführt werden.

Zur Erreichung höherer Leistungen und besonders zur Erreichung einer höheren Spannung ist es auch bekannt, mehrere Membran-Elektroden-Einheiten, wie vorstehend beschrieben, zu einem sogenannten Brennstoffzellenstack zusammenzuschalten (US 4,175,165 "Fuel cell system utilizing ion exchange membranes and biopolar plates"). Dazu wurden bisher eine Vielzahl solcher, wie vorstehend beschriebener, Zellen separat aufgebaut, hintereinander angeordnet und elektrisch in Reihe verschaltet, so daß sich die Spannungen der Einzelzellen addieren. Der konstruktionstechnische Aufwand einer derartigen Reihenschaltung ist jedoch sehr hoch, da jede Membran-Elektroden-Einheit eine separate Brennstoffversorgung aufweisen muß. Dadurch resultiert ein sehr hoher konstruktionstechnischer Aufwand für diese Zellen.

So sind in JP-A-5041221 und JP-A-61-121265 Brennstoffzellen beschrieben, die in Reihe geschaltet werden können, wobei der JP-A-5041221 auch die Möglichkeit einer zweidimensionalen Reihenschaltung entnommen werden kann.

Der EP 0 198 483 A2 kann man eine elektrochemische Zelle entnehmen, bei der verschiedene Elektrodensegmente nebeneinander angeordnet sind, wobei jedoch die Verbindung der einzelnen Elektroden über externe Verbindungen mit Leitungen erreicht wird.

Eine weitere Möglichkeit für eine Brennstoffzelle ist in WO-A-94/05051 beschrieben, bei der ebenfalls eine Reihenschaltung mehrerer Einzelzellen durch entsprechende Nacheinanderanordnung von verschiedenen Elektroden, die entgegengesetzt gepolt sind, erreicht wird.

Ausgehend hiervon ist es die Aufgabe der vorliegenden Erfindung, eine PEM-Brennstoffzelle anzugeben, die neben hohen Ausgangsspannungen, einen sehr einfachen und kostengünstigen Aufbau aufweist.

Die Aufgabe wird durch die Merkmale des Anspruchs 1 gelöst. Die Unteransprüche zeigen vorteilhafte Weiterbildungen auf.

Erfindungsgemäß wird somit vorgeschlagen eine PEM-Brennstoffzelle aus sogenannten Streifenmembranen und daran beidseitig kontaktierten Platten aufzubauen. Die Platten sind dabei so ausgelegt, daß sie sowohl leitfähige und nichtleitfähige Bezirke aufweisen, wobei diese Bezirke so angeordnet sind, daß ein Kurzschluß zwischen den einzelnen Elektroden einer Membranseite vermieden wird. Erfindungswesentlich ist somit die Verwendung von neuartigen Streifenmembranen und deren Kontaktierungen mit Platten, die so ausgebildet sind, daß sie sowohl leitfähige wie auch nichtleitfähige Bezirke aufweisen. Die erfindungsgemäßen Platten dienen dabei gleichzeitig als Wärmeaustauscher und als Brenngaszufuhr-Einrichtung. Dadurch lassen sich nun PEM-Brennstoffzellen mit einem einfachen Aufbau und einer hohen Ausgangsspannung realisieren. Die Spannung läßt sich dabei noch einmal steigern, wenn sogenannte Brennstoffzellenstacks durch Hintereinanderschalten von mehreren Streifenmembranen mit dem vorbeschriebenen Aufbau realisiert werden. Erfindungsgemäß ist es weiterhin möglich, nicht einzelne Streifenmembrane, sogenannte eindimensionale Streifenmembrane, einzusetzen, sondern mehrere dieser Streifenmembrane parallel zu sogenannten zweidimensionalen Streifenmembranen anzuordnen. Die zweidimensionalen Streifenmembrane können dabei so aufgebaut sein, daß entweder die einzelnen Streifenmembrane parallel zueinander angeordnet sind und durch die erfindungsgemäßen Platten parallel verschaltet sind, oder daß die einzelnen Streifenmembrane parallel hintereinander angeordnet sind und hintereinander in Reihe geschaltet sind. Dadurch läßt sich eine nochmalige Steigerung der Spannung realisieren.

Die erfindungsgemäß eingesetzte Streifenmembran besteht aus speziell verschalteten Einzelzellen. Zum einen ist es dabei möglich, daß die Einzelzellen entweder über elektronisch leitfähige Bezirke (Anspruch 21) oder durch eine treppenförmige Anordnung (Anspruch 20) in Reihe verschaltet werden.

Für die erste Ausgestaltung der Streifenmembrane erfolgt die Verschaltung in der Weise, daß flächig nebeneinander angeordnete Bezirke mit unterschiedlicher Leitfähigkeit vorgesehen sind.

Ein Bezirk wird dabei durch die Einzelzelle selbst gebildet. Die Einzelzelle besteht dabei, um die Ionenleitfähigkeit zu gewährleisten, aus einem ionenleitfähigen Material. Dazu werden polymere Festelektrolyten in Form von Membranen eingesetzt. Da entweder Kationen oder Anionen transportiert werden müssen, muß die Membrane entweder für Kationen oder für Anionen permeabel sein. Die Ionenleitfähigkeit ist dabei in wässriger Umgebung für kationenleitende Polymere im allgemeinen dann gegeben, wenn im Polymer fest verankerte, d.h. im allgemeinen durch chemische Bindung verankerte Carbonsäuregruppen und/oder Sulfonsäuregruppen und/oder Phosphonsäuregruppen vorhanden sind. Für anionenleitende Polymer ist die Ionenleitfähigkeit insbesondere dann gegeben, wenn das Polymer Aminogruppen, quartäre Ammoniumgruppen oder Pyridiniumgruppen enthält. Die Fähigkeit der Ionenleitfähigkeit wird bei den bisher beschriebenen Möglichkeiten dadurch erzeugt, daß in der Membran fest verankerte Ionen existieren oder bei Quellung in Wasser erzeugt werden.

Beispiele für kationenleitende Polymere dieses Typs sind sulfonierte Polysulfone, Polyethersulfone oder auch Polyetherketone.

Die Dicke der Membran kann dabei im Bereich zwischen 0,5 µm und 1 mm, bevorzugt im Bereich von 10 µm bis 200 µm liegen. Die Flächen der Membran für die Einzelzelle richten sich dabei nach der geforderten Leistung des Stacks. Die Flächen können im Bereich von 1mm² bis 1 000 000 mm² liegen, bevorzugt im Bereich von 100 bis 10 000 mm².

Um die Funktion als Einzelzelle zu ermöglichen, sind nun die vorstehend beschriebenen Membranen beidseitig mit Elektrodenmaterial beschichtet. Da an den Elektroden die elektrochemischen Umsetzungen der Zelle erfolgen, können die Elektroden entweder selbst aus dem Material bestehen, das elektrochemisch umgesetzt wird, oder aus Material, welches die elektrochemische Umsetzung katalysiert. Das Material muß elektronisch leitfähig sein und besteht insbesondere aus Metallen, Metalloxiden, Mischoxiden, Legierungen, Kohlenstoff, elektronisch leitfähigen Polymeren oder Mischungen hieraus.

Die Materialien können Zusatzstoffe enthalten, die der Einstellung von Hydrophilie, Hydrophobie dienen. Damit können die Elektrodenschichten beispielsweise mit wasserabweisenden Eigenschaften ausgestattet werden. Weiter sind Zusatzstoffe möglich, die die Einstellung einer gewissen Porosität erlauben. Dies ist insbesondere dann von Bedeutung, wenn gasförmige Stoffe katalytisch an den Elektroden umgesetzt werden, wobei ein Dreiphasenkontakt zwischen Gas, Katalysator und ionenleitfähigem Bezirk erforderlich ist. Weiter können sog. Binder zugemischt werden, die die stabile und funktionsfähige Anbindung der Elektrode an den ionenleitenden Bezirk erleichtert.

Diese so aufgebaute Einzelzelle wird nun mit Hilfe von flächigen elektronisch leitfähigen Bezirken mit anderen Einzelzellen elektrisch in Reihe geschaltet.

Die elektronenleitenden Bezirke haben die Aufgabe, eine elektronische Leitfähigkeit zwischen jeweils einer Elektrodenfläche einer Einzelzelle und der auf der anderen Seite der Membran angeordneten Elektrodenfläche der nächsten Einzelzelle herzustellen.

Für die elektronisch leitfähigen Bezirke werden Materialien verwendet, die anstelle der Ionenleitfähigkeit der Einzelzelle nun eine Elektronenleitfähigkeit aufweisen. Die Funktion der Streifenmembran ist dabei unabhängig von bestimmten Polymermaterialien für die elektronenleitenden Bezirke, so lange die Fähigkeit der Materialien zur Elektronenleitfähigkeit gegeben ist. Die Elektronenleitfähigkeit bei polymeren Materialien kann erreicht werden, indem Polymere eingesetzt werden, die von ihrem molekularen Aufbau her befähigt sind, Elektronenleitfähigkeit zu erreichen, wie dies z.B. bei Polyacetylen oder Polythiophenen der Fall ist.

Die Elektronenleitfähigkeit kann auch erzeugt werden, indem ein gewisser Anteil leitfähiger Substanzen zu einem nichtleitenden Polymer zugemischt wird. Bei den leitfähigen Substanzen handelt es sich insbesondere um Leitfähigkeitsruß, Graphit, Kohlenstoff-Fasern, Partikel oder Fasern von elektronisch selbst leitfähigen Polymeren, Metallteilchen, -flocken oder -fasern oder metallisierte Trägermaterialien.

Die Polymere können Zusatzstoffe zur Veränderung des Quellverhaltens in Wasser enthalten. Dies ist insbesondere dann von Bedeutung, wenn die Membran in wäßrige Umgebung eingesetzt wird. Hier quellen mit geladenen Gruppen versehene, ionisch leitfähige Bezirke der Membran, was sich in einer Änderung der geometrischen Maße bemerkbar macht. Andere Bezirke, die nicht mit geladenen chemischen Gruppen versehen sind, quellen dagegen kaum, so daß sich mechanische Spannungen an den Grenzflächen beider Schichten ergeben. Um dies zu vermeiden, kann den nicht mit geladenen Gruppen versehenen Bezirken ein Zusatzstoff beigemengt werden, der das Quellungsverhalten beider anpaßt.

Erfindungswesentlich ist nun, daß die vorstehend beschriebenen Einzelzellen über die elektronisch leitfähigen Bezirke in Reihe geschaltet werden. Dazu wird entweder die untere Elektrodenfläche einer Membran einer Einzelzelle über die elektronisch leitfähigen Bezirke mit der folgenden Einzelzelle, und zwar hier mit der oberen Elektrodenfläche verbunden. Umgekehrt ist es natürlich genauso möglich, daß die obere Elektrodenfläche einer ersten Einzelzelle über den elektronisch leitfähigen Bezirk mit der unteren Elektrodenfläche der nächsten Einzelzelle verbunden wird.

Bei einem derartigen Aufbau grenzen die elektrodenbeschichteten ionisch leitfähigen Bezirke (die einer Einzelzelle entsprechen) direkt an die elektronisch leitfähigen Bezirke. Um zu vermeiden, daß an dieser Grenze die beschichtete Ober- und Unterseite des ionisch leitfähigen Bezirks durch die elektronisch leitfähigen Bezirke kurzgeschlossen werden, was den Ausfall der Einzelzelle bedeutet, dürfen die Elektrodenbeschichtungen nicht bis an den Rand des ionisch leitfähigen Materials aufgebracht sein. Es darf jeweils nur die obere oder die untere Elektrodenbeschichtung einer Einzelzelle mit dem benachbarten elektrisch leitfähigen Bezirk elektrisch leitfähig verbunden sein. Dies wird erreicht, in dem auf der einen Seite des ionenleitenden Bezirks der Bereich zwischen Elektrodenbeschichtung und elektronisch leitfähigem Bezirk mit elektronisch leitfähigen Strukturen beschichtet wird, so daß eine wie oben beschrieben definierte elektrische Verschaltung der einzelnen Membranbezirke möglich wird. Das hierzu verwendete Material besteht entweder aus den unter Materialien für die elektronisch leitfähigen Bezirke oder aus dem unter den Materialien für die Elektrodenbeschichtung der Membran beschriebenen Materialien.

Dadurch wird nun eine In-Reihe-Schaltung der einzelnen Einzelzellen über die elektronisch leitfähigen Bezirke erreicht. Die Abmessungen des elektronisch leitfähigen Bezirks entsprechen dabei in Dicke und Breite in etwa denen der Einzelzelle, so daß insgesamt eine flächige Streifenmembran entsteht, die aus periodisch wiederholten Bezirken, nämlich einerseits aus der Einzelzelle und andererseits aus den elektronisch leitfähigen Bezirken besteht.

Nach einer bevorzugten Ausführungsform wird nun vorgeschlagen, daß zwischen den Einzelzellen und den elektronisch leitfähigen Bezirken Isolationsbezirke angeordnet sind. Die Abmessungen (Dicke, Breite) entsprechen dabei in etwa denen der Einzelzelle bzw. des leitenden Bezirks.

Diese Bezirke dienen zur elektrischen Isolation zwischen den unterschiedlich leitfähigen Bezirken. Sie bestehen deshalb aus sowohl ionisch als auch elektronisch nicht leitfähigem Polymermaterial. Die Funktion der Streifenmembran ist dabei unabhängig von bestimmten Polymermaterialien für die nichtleitenden Bezirke, so lange die Materialien weder ionen- noch elektronenleitend sind. Es kommen deshalb solche Polymermaterialien zum Einsatz, die weder unter die Kategorie "Materialien für die ionenleitfähigen Bezirke der Membraneinheiten" noch unter die Kategorie "Materialien für die elektronisch leitfähigen Bezirke" fallen.

Beim Aufbau der Membran mit Isolationsbezirken können im Gegensatz zum Aufbau ohne Isolationsbezirke die Elektrodenbeschichtungen die gleiche Fläche besitzen wie die ionenleitenden Membranen.

Zur In-Reihe-Schaltung bei dieser Ausgestaltung der Erfindung muß dann gewährleistet sein, daß eine Verbindung über die elektronisch leitfähigen Bezirke mit der unteren bzw. oberen Elektrodenfläche der Einzelzellen gewährleistet ist. Dies wird dadurch ermöglicht, daß die Streifenmembran in bestimmten Bereichen, und zwar auf der oberen bzw. unteren Membranfläche des Isolationsbezirks mit elektronisch leitfähigen Strukturen beschichtet wird, so daß eine definierte elektrische Verschaltung der einzelnen Membranbezirke möglich wird, und zwar in der Weise, daß jeweils eine Elektrodenfläche einer Einzelzelle mit der auf der anderen Seite der Membran angeordneten Elektrodenfläche der nächsten Einzelzelle verbunden ist. Das hierzu verwendete Material besteht entweder aus den unter Materialien für die elektronisch leitfähigen Bezirke oder aus dem unter den Materialien für die Elektrodenbeschichtung der Membran beschriebenen Materialien.

Eine Streifenmembran, die nach der bevorzugten Ausführungsform noch zusätzlich Isolationsbezirke aufweist, ist demnach aus sich periodisch wiederholenden Bezirken der Einzelzelle, dem Isolationsbezirk und dem elektronisch leitenden Bezirk aufgebaut. Die Streifenmembran besteht bevorzugt aus 2 bis 300 Einzelzellen.

Bei der Ausführungsform mit dem treppenförmigen Verhalten wird die In-Reihe-Schaltung dadurch erreicht, daß die Elektrodenfläche einer Einzelzelle gleichzeitig die Aufgabedes elektronisch leitfähigen Bezirks übernimmt. Ein separater elektronisch leitfähiger Bereich entfällt in diesem Fall ebenso wie Isolationsbezirke. Um eine In-Reihe-Schaltung zweier Einzelzellen in diesem Fall zu gewährleisten, überlappen die Zellen derart, daß der Randbereich einer Elektrodenfläche der ersten Einzelzelle direkt mit dem Randbereich der Elektrodenfläche auf der anderen Membranseite der nächsten Einzelzelle elektronisch leitend verbunden ist. Es entsteht in diesem Fall eine Streifenmembran, bei der die einzelnen Einzelzellen treppenförmig überlappend aneinandergereiht sind. Der Aufbau der Einzelzelle entspricht der vorstehend beschriebenen Art.

Die, wie vorstehend beschriebene, Streifenmembran kann nun, wie bereits einleitend ausgeführt, entweder als sogenannte eindimensionale Streifenmembran eingesetzt werden oder in Form einer sogenannten zweidimensionalen Streifenmembran. Erfindungsgemäß werden nun mit diesen eindimensionalen bzw. zweidimensionalen Streifenmembranen entsprechende Brennstoffzellen bzw. Brennstoffzellenstacks aufgebaut.

Für den Fall der Verwendung einer eindimensionalen Streifenmembran bzw. einer zweidimensionalen Streifenmembran der vorstehend beschriebenen Art fungieren dann die Platten als Endplatten. Bei der zweidimensionalen Streifenmembran, bei der die einzelnen Streifen parallel angeordnet sind, erfolgt die Parallelschaltung der einzelnen Streifen zueinander durch die Endplatten selbst. In diesem Falle sind dann die elektrisch leitfähigen Bezirke so ausgebildet, daß sie jeweils nur die letzten Elektroden der jeweiligen einzelnen Streifenmembranen zueinander elektrisch leitend verbinden. Für den Fall eines Brennstoffzellenstacks fungieren dann die Platten zum einen als mittelständige Platten und zum anderen wieder als Endplatten in der vorstehend beschriebenen Weise.

Die erfindungsgemäß eingesetzten Endplatten bzw. mittelständigen Platten können dabei auf verschiedene Weise aufgebaut sein. So ist es zum einen möglich, daß ein elektrisch leitfähiger Grundkörper verwendet wird. In diesem elektrisch leitfähigem Grundkörper wird dann auf der der Membran zugewandten Seite ein gewisses Materialstück durch ein nichtleitfähiges Material ersetzt. Es wird also von einem leitfähigen Bauteil und einem nichtleitfähigen Bauteil ausgegangen, das mittels geeigneter Verbindungstechniken (z.B. Kleben, Schweißen oder andere vergleichbare Techniken) zu einer strukturierten Platte, z.B. Endplatte, dauerhaft und dicht verbunden werden. Wesentlich dabei ist, daß nur die erste bzw. letzte Elektrode der Streifenmembran mit dem elektronisch leitfähigen Bauteil in Verbindung steht.

Eine andere Möglichkeit besteht nun darin, daß ein nichtleitender Grundkörper verwendet wird. Nur an der Stelle, die der ersten bzw. letzten Elektrode der Streifenmembran gegenübersteht, ist eine Aussparung vorhanden, in der eine leitfähige Struktur eingelegt und über geeignete Verbindungstechniken, wie vorstehend beschrieben, mit dem nichtleitenden Grundkörper dicht und dauerhaft verbunden wird. Die äußere elektrische Kontaktierung kann entweder dadurch erfolgen, daß der Grundkörper an der Stelle der Aussparung durchbohrt wird und die leitfähige Struktur von der der Membran zugewandten Seite bis zur anderen Seite des Grundkörpers durchgeführt wird (und dort kontaktiert wird) oder dadurch, daß die Aussparung ohne durch Bohrung bis zu einem Rand des Grundkörpers hin erfolgt und die eingelegte leitfähige Struktur ebenfalls diese Länge aufweist, so daß dann dort am Rand die Kontaktierung erfolgen kann.

Alternativ zu den beiden vorstehend beschriebenen Möglichkeiten zur Herstellung der erfindungsgemäßen Platten kann auch eine Beschichtung der entsprechenden Grundkörper verwendet werden. Die Beschichtung erfolgt selbstverständlich auf der der Membran zugewandten Seite des Grundkörpers. Zur Beschichtung wird dabei die gesamte Fläche mit Ausnahme des Bereichs beschichtet, der der ersten bzw. letzten Elektrode der Streifenmembran gegenübersteht. Solche Schichten können beispielsweise mit Dünnschichttechnologien, wie Plasmapolimerisation organischer Verbindungen oder MOPECVD-Verfahren (Metal organyl plasma enhanced chemical vapor deposition) oder durch Aufsprühen und Trocknen nicht leitender Polymerlösungen erhalten werden. Selbstverständlich ist auch die umgekehrte Vorgehensweise möglich. Danach wird ein elektronisch nichtleitender Grundkörper verwendet und mit einer entsprechenden elektronisch leitenden Beschichtung versehen, so daß im Falle von mittelständigen Platten eine leitfähige Verbindung zwischen den leitfähigen Bezirken auf beiden Plattenseiten entsteht und im Falle von endständigen Platten die leitfähige Beschichtung eine äußere Kontaktierung zum Spannungsabgriff ermöglicht.

Als bevorzugte Materialien für die elektronisch leitfähigen Bereiche der strukturierten Platten kommen insbesondere Graphit, Metalle, Metallmischungen, Legierungen oder elektronisch leitfähige Polymere infrage. Zu letzteren gehören zum einen die intrinisch leitfähigen Polymere, wie z.B. Polyacetylen oder aber nichtleitende Polymere, die mit elektrisch leitfähigen Zusatzstoffen versehen sind. Als Zusatzstoffe vor allem Pulver, Granulate, Flocken, Faserstücke, Fasern, Netze oder Matten von Metallen, Metallmischungen, Legierungen, Graphit- oder Kohlenstofffasern infrage. Die Materialien müssen insbesondere die Arbeitsbedingungen in einer PEM-Brennstoffzelle überstehen, d.h. Kontakt mit den Brennstoffen, Wasser, auch bei Temperaturen oberhalb Raumtemperatur (typischerweise 70 bis 90° C) und sie müssen elektrochemisch stabil sein.

Als bevorzugte Materialien für die elektronisch nichtleitfähigen Bezirke der strukturierten Platten kommen nichtleitende Keramiken, oxidische Verbindungen und vor allem Kunststoffe infrage. Insbesondere Oxidations- und hydrolysestabile Konstruktionspolymere, wie beispielsweise Polymere mit aromatischem Rückgrat, wie zum Beispiel Polysulfone oder Polyetherketone.

Die Endplatten/bipolaren Platten enthalten typischerweise Strukturen, welche die Brennstoffzufuhr und -abfuhr an die Membran ermöglichen und dafür sorgen, daß sämtliche Elektroden der Streifenmembran mit Brennstoff versorgt werden. Der aus dem Stand der Technik bekannte Aufbau der Brennstoffversorgung kann im Prinzip auf die strukturierten Endplatten und strukturierten biopolaren Platten übertragen werden.

Dieser Aufbau besteht typischerweise aus einem Kanal für die Brennstoffabfuhr und einem Kanal für die Brennstoffzufuhr. Gegenüber den Elektroden der Streifenmembran enthält die Endplatte Verteilungsstrukturen, die einerseits auf die Membran drücken und andererseits Hohlräume zur Gaszufuhr an die Membranelektroden enthält. Hierbei kann es sich z.B. um parallele Kanäle oder schachbrettartig angeordnete Kanäle oder um poröse Strukturen handeln. Die Strukturen sind mit den Brennstoffzufuhrkanälen und Brennstoffabfuhrkanälen verbunden, so daß ein Brennstofffluß vom Zufuhrkanal über die Verteilungsstruktur zum Abführkanal stattfinden kann.

Im Fall der Stackbauweise münden die Zufuhr- und Abfuhrkanäle in Versorgungskanäle, die durch den gesamten Stack laufen. Jede bipolare Platte enthält die entsprechenden Bohrungen, die Aneinanderreihung mehrerer Platten mit diesen Bohrungen bildet dann die beschriebenen Versorgungskanäle.

Der große Vorteil dieser Bauweise mit Streifenmembranen liegt darin, daß nur noch eine Brennstoffversorgungsstruktur für alle auf einer Streifenmembran vorhandenen Zelleneinheit vonnöten ist.

Da Brennstoffzellen während des Betriebes unter elektrischer Belastung zwangsläufig Verlustwärme produzieren, müssen bei einem Zellaufbau Möglichkeiten vorhanden sein, die überschüssige Wärme abzuführen, um eine Überhitzung der Brennstoffzelle zu verhindern.

Hierfür können die strukturierten Endplatten/bipolaren Platten Kanäle oder Hohlräume enthalten, die von einem entsprechenden Kühlmittel, z.B. Wasser durchströmt werden, das über entsprechende Zufuhr- und Abfuhrkanäle eingespeist wird.

Im Fall der Stackbauweise münden die Zufuhr- und Abfuhrkanäle in Versorgungskanäle, die durch den gesamten Stack laufen. Jede bipolare Platte enthält die entsprechenden Bohrungen, die Aneinanderreihung mehrerer Platten mit diesen Bohrungen bildet dann die beschriebenen Versorgungskanäle.

Wie vorstehend beschrieben, kann die bipolare Platte auch aus zwei mit den Flachseiten aneinander angeordnete Endplatten bestehen. In diesem Fall können die Kühlungsstrukturen auch als Aussparungen in beiden Flachseiten bestehen, so daß sich nach dem Zusammengeben beider Platten dann die Kühlungskanäle ausbilden. Eine weitere Möglichkeit besteht darin, daß ein zusätzlicher elektronisch leitfähiger Kühlkörper zwischen den die bipolare Platte bildenden Endplatten eingefügt wird.

Der Vorteil dieser Bauweise mit Streifenmembranen liegt darin, daß nur noch eine Kühlstruktur für alle auf einer Streifenmembran vorhandenen Zelleinheiten vonnöten ist.

Die einzelnen Zellkomponenten, d.h. die Platten und die Streifenmembran werden gegebenenfalls mittels Dichtungen aneinandergepreßt, um die Brennstoffdichtigkeit des gesamten Zellaufbaus zu gewährleisten. Bevorzugt werden dabei die Dichtungen zwischen Streifenmembran und Platten eingesetzt. Der Aufbau der Gesamtstruktur kann beispielsweise aus den Einzelflächen erfolgen, die dann mittels Klebe- oder Schweißtechnik dauerhaft miteinander verbunden werden.

Weitere Merkmale, Einzelheiten und Vorzüge der Erfindung ergeben sich anhand der Zeichungen. Hierbei zeigen:
**Figur 1**
   im vertikalen Schnitt die wichtigsten Bauteile einer PEM-Brennstoffzelle nach dem Stand der Technik
**Figur 2**
   im vertikalen Schnitt den Aufbau einer erfindungsgemäßen Streifenmembran in treppenförmiger Ausführung
**Figur 3**
   im vertikalen Schnitt den Aufbau einer erfindungsgemäßen Streifenmembran
**Figur 4**
   im vertikalen Schnitt die wichtigsten Bauteile zum Aufbau einer erfindungsgemäßen PEM-Brennstoffzelle
**Figur 5**
   zeigt in der Draufsicht den Aufbau einer zweidimensionalen Streifenmembran, wobei die einzelnen Streifenmembrane für eine redundante Parallelschaltung angeordnet sind
**Figur 6**
   zeigt in der Draufsicht den Aufbau einer zweidimensionalen Streifenmembran, wobei hier die einzelnen Streifenmembrane hintereinander in Reihe geschaltet sind
**Figur 7**
   zeigt im vertikalen Schnitt die wichtigsten Bauteile zum Aufbau eines erfindungsgemäßen Brennstoffzellenstacks.

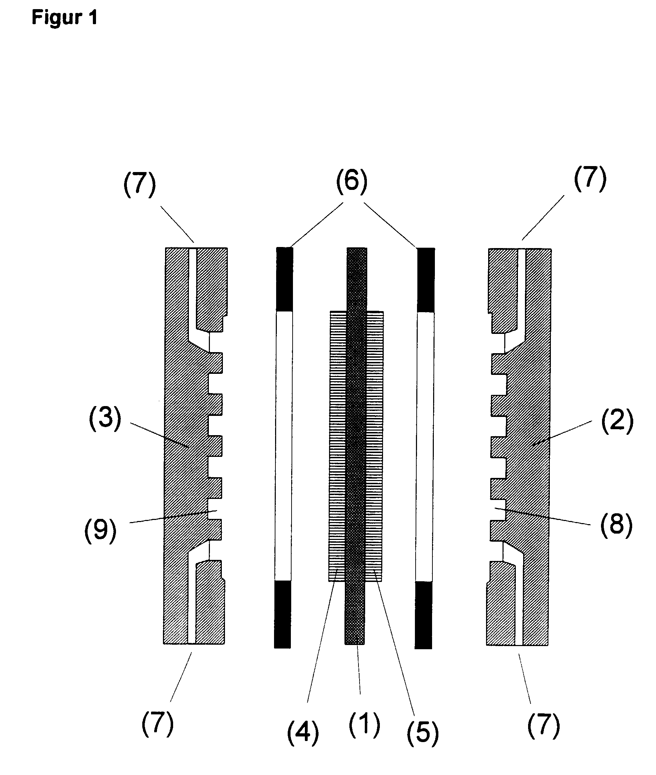

**Figur 1** zeigt die wichtigsten Bauteile zum Aufbau einer Brennstoffzelle nach dem Stand der Technik. Diese Zellen (z.B. A.J. Appley, E.B. Yeager, Energy 11, 137-152; 1986) bestehen aus zwei aus elektronisch leitfähigem Material gefertigten Endplatten 2 und 3 sowie aus einer Membran 1 und darauf beiseitig aufgebrachten Elektroden 4 und 5. Die Gasdichtigkeit wird durch Zusammenpressen der Membran 1 und der Endplatten 2, 3 mittels zweier Dichtungen 6 ermöglicht. Beim Zellaufbau nach dem Stand der Technik ist es nun so, daß die Endplatten 2 und 3 mit ihrer der der Membran 1 zugewandten Seite auf die Membran aufdrücken. Dadurch kommt ein elektrischer Kontakt zustande und die Spannung kann abgegriffen werden. Zur Zuführung des Brennstoffes sind geeignete Zu- und Abführkanäle 7 vorgesehen. Zur besseren Verteilung der Brennstoffe weisen die Endplatten 2, 3 geeignete Verteilerstrukturen 8, 9 auf.

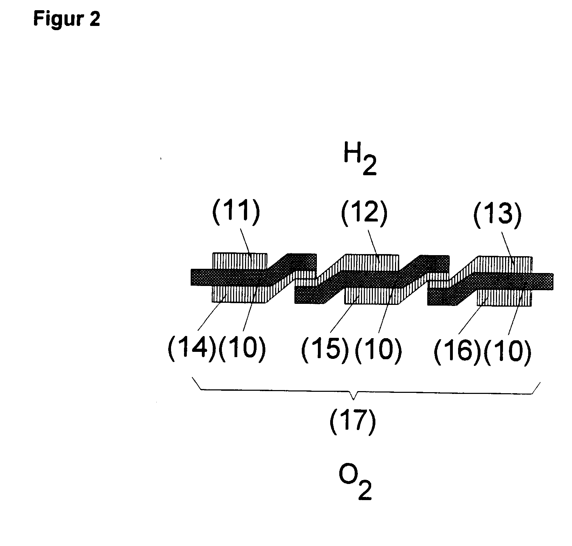

**Figur 2** zeigt nun schematisch im vertikalen Schnitt den Aufbau einer erfindungsgemäßen Streifenmembran 17 in treppenförmiger Anordnung. Diese erfindungsgemäße Streifenmembran 17 besteht aus einer Anzahl von ionischleitfähigen festen Polymermembranbezirken 10, wobei jede Seite eines Membranbezirks mit einer Elektrodenstruktur beschichtet ist. Im Falle einer Wasserstoff/Sauerstoffbrennstoffzelle ist also jeder ionischleitfähige Membranbezirk 10 mit einer Wasserstoffelektrode 11 bis 13 und einer Sauerstoffelektrode 14 bis 16 beschichtet und arbeitet so als Brennstoffzelleneinheit. Je zwei benachbarte Membranbezirke 10 sind dabei aneinandergebunden, indem die untere Elektrode des ersten Membranbezirks (14) mit der oberen Elektrode (12) des zweiten Membranbezirks 10 elektronisch leitfähig, gasdicht und dauerhaft miteinander verbunden ist. Auf diese Weise erfolgt eine membraninterne Reihenschaltung aller Brennstoffzelleneinheiten in der Membran 17 und die gesamte Spannung kann an der ersten Elektrode der oberen Membranseite (Elektrode 11) und der letzten Elektrode der unteren Membranseite (Elektrode 16) abgegriffen werden. Eine derartige Streifenmembran 17 liefert gegenüber einer Einzelzelle eine dreimal so hohe Ausgangsspannung, da sie drei beschichtete ionischleitfähige Membranbezirke enthält. Trotzdem benötigt eine solche Streifenmembran 17 nur eine Brennstoffversorgung für die obere Membranseite (Wasserstoff) und eine Brennstoffversorgung für die untere Membranseite (Sauerstoff).

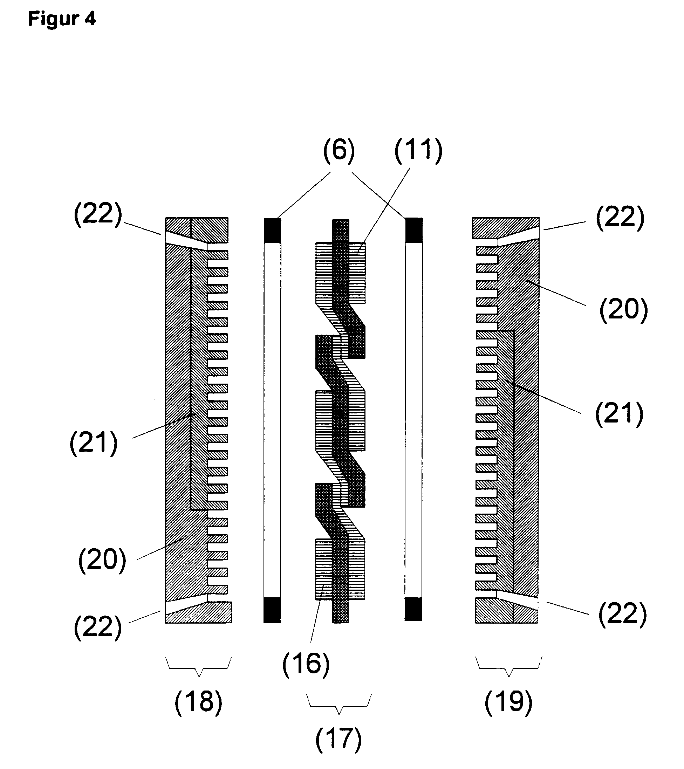

Diese erfindungsgemäße Streifenmembran ist aber nun nicht in den vorstehend beschriebenen Zellaufbau nach dem Stand der Technik integrierbar. Wenn nämlich eine derartige Streifenmembran in eine herkömmliche PEM-Brennstoffzelle nach dem Stand der Technik eingebaut würde, käme es aufgrund der elektrisch leitfähigen Endplatten zum Kurzschluß. Erfindungsgemäß wird deshalb ein Aufbau gemäß Figur 4 vorgeschlagen.

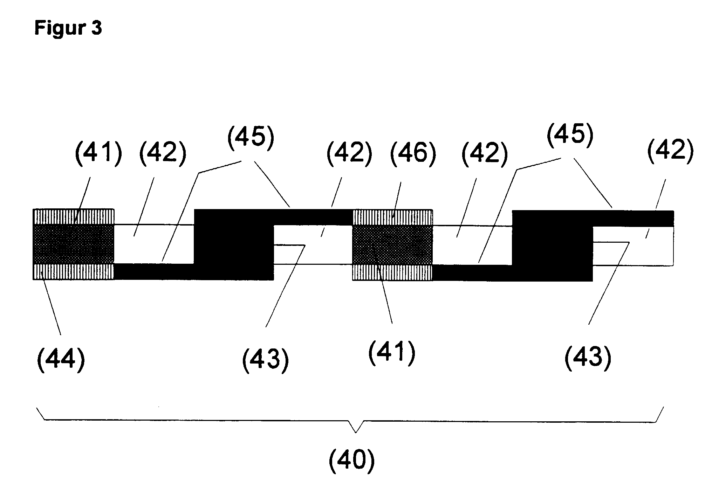

**Figur 3** zeigt nun ebenfalls im Schnitt eine Streifenmembran 40, wobei hier die Streifenmembran 40 in Form von hintereinander angeordneten Einzelzellen 41 aufgebaut ist. Die jeweiligen Einzelzellen 41 sind dabei durch Isolationsbezirke 42 von einander getrennt. Zwischen diesen Bezirken 42 sind rein elektronisch leitende Bezirke 43 angeordnet. Entscheidend bei dieser Streifenmembran ist, daß die untere Elektrodenfläche 44 der ersten Einzelzell 41 über eine elektronisch leitfähige Beschichtung 45 mit der oberen Elektrodenfläche 46 der nächsten Einzelzelle 41 in Reihe verschaltet ist. Die periodische Abfolgung derartiger in Fig. 3 im Schnitt abgebildeten Einheiten bildet eine Streifenmembran.

Diese erfindungsgemäße Streifenmembran kann ebenso, wir vorstehend für die treppenförmige Ausgestaltung schon beschrieben, mit den erfindungsgemäßen Platten aus nichtelektronisch leitfähigem Material zu einer PEM-Brennstoffzelle aufgebaut werden.

**Figur 4** zeigt nun ebenfalls schematisch im vertikalen Schnitt, vergleichbar mit Figur 1, die wichtigsten Bauteile zum Aufbau einer erfindungsgemäßen Brennstoffzelle. Erfindungsgemäß wird somit vorgeschlagen, Streifenmembrane einzusetzen, wobei die benötigten Endplatten sowohl leitfähige wie auch nichtleitfähige Bezirke aufweisen, um einen Kurzschluß der einzelnen Elektrodenflächen einer Streifenmembran untereinander zu vermeiden. Demgemäß ist die Erfindung nicht nur auf die Streifenmembran gemäß der Ausführungsform nach Figur 2 beschränkt, sondern grundsätzlich können alle Streifenmembrane (z.B. auch die nach Fig. 3) eingesetzt werden, bei denen eine Reihenschaltung von hintereinander angeordneten Einzelzellen vorliegt. Erfindungswesentlich ist demnach die Kombination von Streifenmembranen und speziell ausgestalteten strukturierten Platten. Wesentlich ist hier bei der Ausführungsform nach Figur 3, d.h. wenn lediglich eine eindimensionale Streifenmembran (Elektrodenanordnung in einer Richtung) eingesetzt wird, daß nur die erste oder nur die letzte Elektrode der Streifenmembran Kontakt mit dem elektronisch leitfähigen Bezirken der Endplatte hat und alle anderen Elektroden Kontakt mit dem nichtleitfähigen Plattenbereich haben.

In der Ausführungsform nach Figur 3 ist die PEM-Brennstoffzelle so aufgebaut, daß zwei Endplatten 18 und 19 vorgesehen sind, die zusammen mit der Membraneinheit 17 die Zelle bilden. Die Endplatten 18 und 19 haben elektrisch leitfähige Bezirke 20 und nichtleitfähige Bezirke 21. Diese Bezirke sind so angeordnet, daß von der Streifenmembran 17 nur die erste Elektrode 11 auf der einen bzw. die letzte Elektrode 16 auf der anderen Membranseite elektrisch Kontakt zum leitfähigen Bezirk 20 der jeweiligen Endplatten 18, 19 hat. Alle anderen Elektroden stehen nur mit isolierendem Material in Kontakt. An diesen leitfähigen Bezirken 20 der Endplatten kann dann von außen die Gesamtspannung der Streifenmembranzelle abgegriffen werden, ohne daß einzelne Zelleinheiten der Streifenmembran kurzgeschlossen werden können. Die strukturierten Endplatten 18, 19 enthalten, wie es an und für sich schon aus dem Stand der Technik bekannt war, Zu- bzw. Abführkanäle 22 für die Brennstoffe, die mittels geeigneter Strukturen auf sämtliche Elektroden einer Membranseite verteilt werden. Diese Strukturen müssen deshalb sowohl in den leitfähigen als auch in den nichtleitfähigen Bezirken der Endplatten integriert sein, um die Brennstoffversorgung sämtlicher Elektroden sicherzustellen.

Die erfindungsgemäß vorgeschlagenen Platten können dabei, wie in der Beschreibung ausführlich geschildert, entweder aus einem elektrisch leitfähigen Grundkörper und darin eingesetzten entsprechenden nichtleitfähigen Bezirken oder aus einem nichtleitfähigen Grundkörper und entsprechend eingesetzten leitfähigen Bezirken bestehen. Eine weitere Möglichkeit besteht darin, daß entsprechende Grundkörper verwendet werden und dann eine Beschichtung mit einem leitfähigen oder einem nichtleitfähigen Material vorgenommen wird. Wesentlich ist in allen Fällen, daß sie jeweils nur eine elektrische Kontaktierung der ersten bzw. letzten Elektrode einer Membranseite mit der letzten bzw. ersten Elektrode der anderen Membranseite erfolgt.

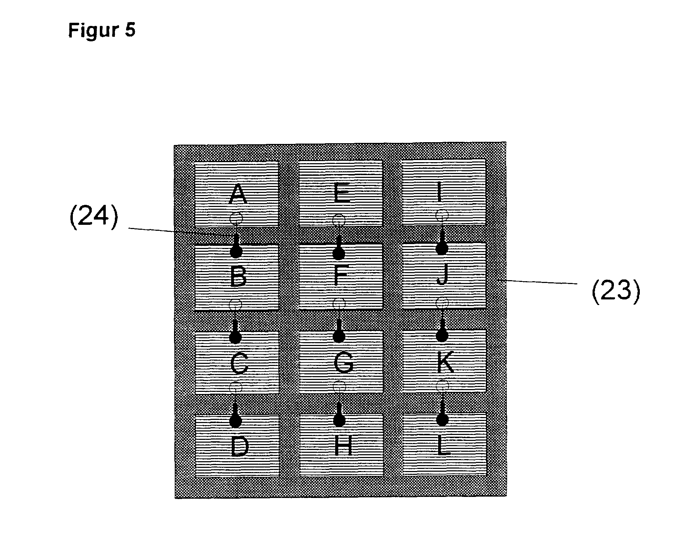

**Figur 5** zeigt nun in der Draufsicht schematisch den Aufbau einer erfindungsgemäßen zweidimensionalen Streifenmembran, wobei in der Ausführungsform nach Fig. 5 eine redundante Parallelschaltung vorliegt. Diese Membran besteht ebenfalls aus ionischleitfähigem Material 23, wobei die Elektrodenflächen A bis L auf beiden Elektrodenseiten sowohl waagerecht als auch senkrecht nebeneinander angeordnet sind. Die Membran nach Fig. 5 ist dabei so aufgebaut, daß drei separate Reihenschaltungen auf der Membran vorliegen und zwar sind jeweils die Zelleneinheiten A, B, C, D, die Zelleneinheiten E, F, G, H und die Zelleneinheiten I, J, K, L gemäß dem Streifenmembranprinzip intern in Reihe verschaltet. Diese interne Reihenverschaltung ist in Fig. 5 durch die Symbole 24 schematisch dargestellt, wobei beispielsweise die Verschaltung zwischen den Elektrodenflächen so zu verstehen ist, daß die obere Elektrodenfläche, z.B. B, mit der unteren Elektrodenfläche, z.B. A, membranintern elektrisch leitend verbunden ist. Auch in dieser Ausführungsform ist es möglich, daß die einzelnen Zelleinheiten durch nichtleitende Isolationsbezirke getrennt werden.

Erfindungsgemäß kann nun ebenfalls gemäß der Ausführungsform nach Fig. 4 eine PEM-Brennstoffzelle aufgebaut werden, wobei nun hier nur statt der dort beschriebenen eindimensionalen Streifenmembran die vorstehend beschriebene zweidimensionale Streifenmembran eingesetzt wird. Die erfindungsgemäßen Endplatten gemäß Fig. 3 erlauben in diesem Fall nun nicht nur, daß definierte Abgreifen der Reihenspannungen, sondern erlauben zusätzlich auf einfache Art und Weise die weitere Verschaltung der einzelnen separaten Reihenschaltungen auf der Membran. Dabei werden die drei separaten Reihenschaltungen nach Fig. 4 parallel verschaltet, so daß man eine redundante Stromversorgung erhält, da dann auch bei Ausfall einer der Reihenschaltungen die übrigen zwei weiterarbeiten können. Die Ausführungsform gemäß Fig. 5 in Verbindung mit Fig. 4 weist somit neben einer noch höheren Ausgangsspannung den Vorteil auf, daß auch bei Ausfall einer Zelleneinheit die gesamte Brennstoffzelle weiterarbeiten kann.

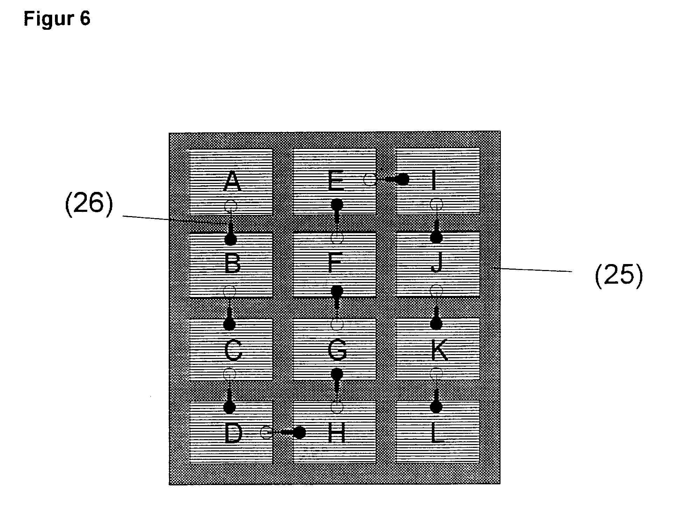

**Figur 6** zeigt nun eine weitere Ausführungsform einer zweidimensionalen Streifenmembran wieder schematisch in der Draufsicht. Die Ausführungsform nach Fig. 6 unterscheidet sich von der Ausführungsform nach Fig. 5 dadurch, daß hier nicht die einzelnen Streifenmembranen über die Endplatten parallel geschaltet werden, sondern daß hier die einzelnen Streifenmembrane zueinander selbst wiederum über die elektrisch leitenden Verbindungen 26 in Reihe geschaltet sind. Diese Membran besteht demnach ebenfalls aus einem ionischleitfähigem Material 25, wobei alle Elektrodenflächen A bis L auf beiden Elektrodenseiten sowohl waagerecht als senkrecht nebeneinander angeordnet sind. Alle Zelleneinheiten A bis L sind hierbei, wie oben beschrieben, in Reihe verschaltet. Die Gesamtspannung kann dann an der oberen Elektrode von Einheit A und der unteren Einheit von Einheit L abgenommen werden. Auch in dieser Ausführungsform ist es möglich, daß die einzelnen Zelleinheiten durch nichtleitende Isolationsbezirke getrennt werden. Der Spannungsabgriff erfolgt wieder mit den vorstehend beschriebenen Endplatten, z.B. gemäß Ausführungsform nach Fig. 4.

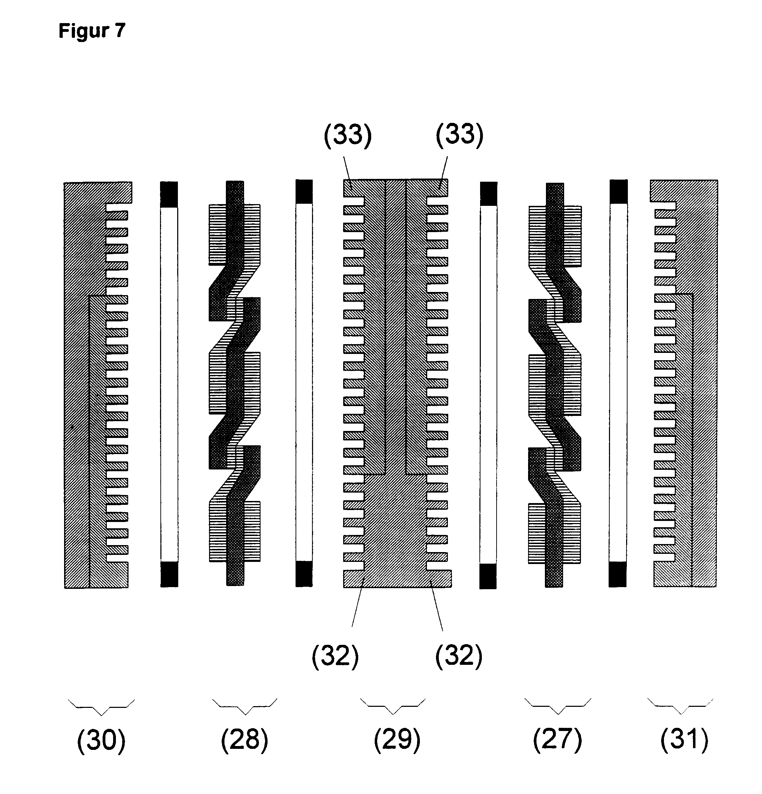

**Figur 7** zeigt nun schematisch im vertikalen Schnitt die wichtigsten Bauteile zum Aufbau einer erfindungsgemäßen PEM-Brennstoffzelle in Stackbauweise.

Dazu wird die erfindungsgemäße Streifenmembran anstatt der üblichen einfachen Membranelektrodeneinheiten eingesetzt. Die Ausführungsform nach Fig. 7 besteht beispielshaft aus zwei Streifenmembranen 27 und 28, die mittels einer bipolaren Platte 29 und zwei Endplatten 30 und 31 zu einem Brennstoffzellenstack aufgebaut werden kann. Die Streifenmembranen 27, 28 sind mittels einer strukturierten bipolaren Platte 29 miteinanderverbunden. Die Gesamtzellspannung wird an den strukturierten Endplatten 30, 31 abgegriffen. Wesentlich im Aufbau der strukturierten bipolaren Platte 29 ist, daß sie auf beiden Plattenseiten elektrischleitfähige Bezirke 32 und nichtleitfähige Bezirke 33 aufweist. Die Bezirke sind so angeordnet, daß von den jeweils angrenzenden Streifenmembranen 27, 28 nur die erste bzw. letzte Elektrode elektrischen Kontakt zum leitfähigen Bereich 32 der bipolaren Platte 29 hat. Alle anderen Elektroden stehen nur mit isolierendem Material in Kontakt. Die leitfähigen Bezirke 32 auf beiden Seiten der bipolaren Platte 29 müssen elektrisch leitfähig verbunden sein. Der Aufbau der Endplatten 30, 31 entspricht dabei bereits dem beschriebenen Aufbau der einfachen PEM-Brennstoffzelle in der Ausführungsform nach Fig. 4.

Die strukturierte bipolare Platte 29 enthält (nicht abgebildet) auf beiden Seiten wieder entsprechende Zu- bzw. Abführkanäle für die Brennstoffe, die dann auf beiden Plattenseiten mittels geeigneter Strukturen (z.B. Kanäle, Kanalgitter oder ähnliches) auf sämtliche Elektroden der jeweils angrenzenden Membranseite verteilt werden. Diese Strukturen müssen wieder sowohl in den leitfähigen als in den nichtleitfähigen Bezirken der bipolaren Platte 29 integriert sein, um die Brennstoffversorgung sämtlicher Elektroden sicherzustellen.

Der Aufbau sowohl der bipolaren Platte 29 wie auch der Endplatten 30, 31 entspricht dem in Fig. 4 und kann demnach sowohl aus elektrisch leitenden Grundkörpern bzw. elektrisch nichtleitenden Grundkörpern gefertigt sein.

Analog der Ausführungsform nach Fig. 4 ist es selbstverständlich beim Brennstoffzellenstack auch möglich, die eindimensionale Streifenmembran durch die in Fig. 5 und 6 beschriebene zweidimensionale Streifenmembran zu ersetzen. Dazu ist es nur erforderlich, daß dann die entsprechenden bipolaren Platten bzw. Endplatten entsprechend strukturiert sind, um sowohl einen Spannungsabgriff bei den Endplatten, wie eine elektrischleitfähige Verbindung der einzelnen Streifenmembrane durch die bipolaren Platten zu gewährleisten.

## Patentansprüche

1. PEM-Brennstoffzelle, bestehend aus mindestens einer Streifenmembran (17, 40, 27, 28), die mindestens zwei, höchstens 10.000 flächige Einzelzellen aufweist, wobei jede Einzelzelle aus einer beidseitig auf einer Membran (10, 23, 25) aus einem polymeren Festelektrolyten aufgebrachten Elektrodenschicht (11 bis 13, 14 bis 16, 44, 46) besteht, die Einzelzellen in Reihe geschaltet sind und (17, 40, 27, 28) beidseitig der mindestens einen Streifenmembran kontaktierende Platten (18, 19, 29, 30, 31) vorgesehen sind,
dadurch gekennzeichnet, daß die Platten (18, 19, 29, 30, 31) elektrisch leitfähige Bezirke (20, 32) und nichtleitfähige Bezirke (21, 33) aufweisen, diese Bezirke so ausgelegt sind, daß ein Kurzschluß zwischen den einzelnen Elektroden einer Membranseite der Streifenmembran (17, 40, 27, 28) vermieden is und die Platten (18, 19, 29, 30, 31) auf den zur Streifenmembran (17, 40, 27, 28) weisenden Seiten sowohl in den leitfähigen Bezirken (20, 32) als auch in den nichtleitfähigen Bezirken (21, 33) Brennstoffverteilungsstrukturen zur Brennstoffzufuhr und -abfuhr für alle Zelleinheiten der Streifenmembran aufweisen.

2. PEM-Brennstoffzelle nach Anspruch 1,
dadurch gekennzeichnet, daß eine Streifenmembran (17, 40) eine eindimensionale Streifenmembran bildet und daß die Platten als Endplatten (18, 19) fungieren, wobei jeweils nur die letzte oder die erste Elektrode einer Membranseite mit dem leitfähigen Bezirk (20) Kontakt hat.

3. PEM-Brennstoffzelle nach Anspruch 1,
dadurch gekennzeichnet, daß 2 bis 2.000 Streifenmembranen (17, 40) parallel angeordnet sind und eine zweidimensionale Streifenmembran bilden, und daß die Platten als Endplatten (18, 19) fungieren, wobei jeweils alle ersten oder alle letzten Elektrode einer Membranseite mit den leitfähigen Bezirken (20) Kontakt haben, so daß eine redundante Parallelschaltung entsteht.

4. PEM-Brennstoffzelle nach Anspruch 1,
dadurch gekennzeichnet, daß 2 bis 2.000 Streifenmembranen (17, 40) parallel angeordnet sind und eine zweidimensionale Streifenmembran bilden, wobei die einzelnen Streifenmembrane untereinander durch gesonderte elektrisch leitfähige Verbindungen (24) in Reihe geschaltet sind, und daß die Platten als Endplatten (18, 19) fungieren, wobei nur die erste oder die letzte Elektrode einer Membranseite mit den leitfähigen Bezirken (20) Kontakt hat.

5. PEM-Brennstoffzelle nach Anspruch 1,
dadurch gekennzeichnet, daß zwei bis 2000 einzelne Streifenmembrane (17, 40) (eindimensionale Streifenmembrane) zu einem BrennstoffzellenStack aufgebaut sind, und daß die Platten als mittelständige Platten (29) wie auch als Endplatten (30, 31) fungieren, wobei nur die erste oder die letzte Elektrode einer Membranseite mit den leitfähigen Bezirken (32) Kontakt hat.

6. PEM-Brennstoffzelle nach Anspruch 1,
dadurch gekennzeichnet, daß 2 bis 2.000 Streifenmembrane (17, 40) parallel angeordnet sind und eine zweidimensionale Streifenmembran bilden und daß 2 bis 2.000 dieser zweidimensionalen Streifenmembrane zu einem Brennstoffzellen-Stack aufgebaut sind und daß die Platten als mittelständige Platte (29) und als Endplatten (30, 31) fungieren, wobei jeweils alle ersten bzw. alle letzten Elektroden einer Membranseite mit den leitfähigen Bezirken (32) Kontakt haben, so daß für jede Zelle eine redundante Parallelschaltung entsteht.

7. PEM-Brennstoffzelle nach Anspruch 1,
dadurch gekennzeichnet, daß 2 bis 2.000 Streifenmembrane (17, 40) parallel angeordnet sind und eine zweidimensionale Streifenmembran bilden, wobei die einzelnen Streifenmembrane einer zweidimensionalen Membran untereinander durch gesonderte elektrisch leitfähige Verbindungen (26) in Reihe geschaltet sind und daß 2 bis 2.000 dieser zweidimensionalen Membran zu einem Brennstoff-Stack aufgebaut sind und daß die Platten als mittelständige Platten (29) und als Endplatten (30, 31) fungieren, wobei nur die erste bzw. die letzte Elektrode einer Membranseite mit den leitfähigen Bezirken (32) Kontakt hat.

8. PEM-Brennstoffzelle nach mindestens einem der Ansprüche 1 bis 7,
dadurch gekennzeichnet, daß die Platten (18, 19, 30, 31) aus einem elektrisch leitfähigen Grundkörper bestehen, in den an den entsprechenden Stellen elektrisch nicht leitfähige Bezirke integriert sind.

9. PEM-Brennstoffzelle nach Anspruch 8,
dadurch gekennzeichnet, daß die nichtleitfähigen Bezirke durch Beschichtung mit einem nichtleitfähigen Material aufgebracht sind.

10. PEM-Brennstoffzelle nach mindestens einem der Ansprüche 1 bis 7,
dadurch gekennzeichnet, daß die Platten (18, 19, 30, 31) aus einem nichtleitfähigen Grundkörper bestehen und an den geeigneten Stellen elektrisch leitfähige Bezirke integriert sind.

11. PEM-Brennstoffzelle nach Anspruch 10,
dadurch gekennzeichnet, daß die leitfähigen Bezirke durch Beschichten mit einem leitfähigen Material aufgebracht sind.

12. PEM-Brennstoffzelle nach mindestens einem der Ansprüche 1 bis 11,
dadurch gekennzeichnet, daß das Material für die elektrisch leitfähigen Bezirke (20, 32) für die Platten ausgewählt ist aus Graphit, Metallen, Metallmischungen, Legierungen oder elektronisch leitfähigen Polymeren.

13. PEM-Brennstoffzelle nach Anspruch 12,
dadurch gekennzeichnet, daß die leitfähigen Polymere entweder intrinsisch leitfähige Polymere oder nichtleitfähige Polymere mit elektrisch leitfähigen Zusatzstoffen sind.

14. PEM-Brennstoffzelle nach Anspruch 13,
dadurch gekennzeichnet, daß die Zusatzstoffe ausgewählt sind aus elektrisch leitfähigen Pulvern, Granulaten, Flocken, Faserstücken, Fasern, Netzen oder Matten von Metallen, Metallmischungen, Legierungen, Graphit oder Kohlenstoff.

15. PEM-Brennstoffzelle nach mindestens einem der Ansprüche 1 bis 11,
dadurch gekennzeichnet, daß das Material für die elektrisch nichtleitfähigen Bezirke (21, 33) ausgewählt ist aus Keramiken, oxidischen Verbindungen und Kunststoffen.

16. PEM-Brennstoffzelle nach Anspruch 15,
dadurch gekennzeichnet, daß die Kunststoffe Polysulfone oder Polyetherketone sind.

17. PEM-Brennstoffzelle nach mindestens einem der Ansprüche 1 bis 16,
dadurch gekennzeichnet, daß die Platten (18, 19, 29, 30, 31) Kanäle und/oder Hohlräume für den Kühlmittelfluß aufweisen.

18. PEM-Brennstoffzelle nach mindestens einem der Ansprüche 1 bis 17,
dadurch gekennzeichnet, daß zwischen den Platten (18, 19, 29, 30, 31) und den Streifenmembranen (17, 27, 28, 40) Dichtungen (6) angeordnet sind.

19. PEM-Brennstoffzelle nach mindestens einem der Ansprüche 1 bis 18,
dadurch gekennzeichnet, daß die Streifenmembran (17) aus Einzelzellen besteht, die treppenförmig unter teilweiser Überlappung ihrer Elektrodeflächen (11 bis 13, 14 bis 16) verbunden ist.

20. PEM-Brennstoffzelle nach mindestens einem der Ansprüche 1 bis 18,
dadurch gekennzeichnet, daß die Streifenmembrane (40) aus Einzelzellen (41) besteht, wobei jeweils eine Elektrodenfläche (44) einer Einzelzelle (41) über einen flächigen elektronisch leitfähigen Bezirk (43) mit der auf der anderen Seite der Membran angeordneten Elektrodenfläche (46) der nächsten Einzelzell (41) verbunden ist.

21. PEM-Brennstoffzelle nach Anspruch 20,
dadurch gekennzeichnet, daß zwischen den flächigen Einzelzellen (41) und den flächigen elektronischleitfähigen Bezirken (43) ein flächiger Isolationsbezirk (42) angeordnet ist.

## Claims

1. PEM fuel cell, consisting of at least one strip membrane (17, 40, 27, 28) which has at least two, and at most 10,000, flat individual cells, each individual cell consisting of an electrode layer (11 to 13, 14 to 16, 44, 46) applied on both sides of a membrane (10, 23, 25) made of a polymeric solid electrolyte, the individual cells being connected in series, and contacting plates (18, 19, 29, 30, 31) being provided on both sides of the at least one strip membrane (17, 40, 27, 28), characterized in that the plates (18, 19, 29, 30, 31) have electrically conductive zones (20, 32) and non-conductive zones (21, 33); in that these zones are configured in such a way that a short-circuit between the individual electrodes on one membrane side of the strip membrane (17, 40, 27, 28) is avoided; and in that the plates (18, 19, 29, 30, 31) have, on the sides facing the strip membrane (17, 40, 27, 28), both in the conductive zones (20, 32) and in the non-conductive zones (21, 33), fuel distribution structures to feed and discharge fuel for all cell units of the strip membrane.

2. PEM fuel cell according to Claim 1, characterized in that one strip membrane (17, 40) forms a one-dimensional strip membrane; and in that the plates function as end plates (18, 19), only the last or the first electrode of a membrane side having contact with the conductive zone (20) in each case.

3. PEM fuel cell according to Claim 1, characterized in that from 2 to 2,000 strip membranes (17, 40) are arranged in parallel and form a two-dimensional strip membrane; and in that the plates function as end plates (18, 19), all first or all last electrodes of a membrane side having contact with the conductive zones (20) in each case, so that a redundant parallel circuit is created.

4. PEM fuel cell according to Claim 1, characterized in that from 2 to 2,000 strip membranes (17, 40) are arranged in parallel and form a two-dimensional strip membrane, the individual strip membranes being connected to one another in series by separate electrically conductive connections (24); and in that the plates function as end plates (18, 19), only the last or the first electrode of a membrane side having contact with the conductive zones (20) in each case.

5. PEM fuel cell according to Claim 1, characterized in that from two to 2,000 individual strip membranes (17, 40) (one-dimensional strip membranes) are assembled to form a fuel cell stack; and in that the plates function as central plates (29) and also as end plates (30, 31), only the first or the last electrode of a membrane side having contact with the conductive zones (32).

6. PEM fuel cell according to Claim 1, characterized in that from 2 to 2,000 strip membranes (17, 40) are arranged in parallel and form a two-dimensional strip membrane; and in that from 2 to 2,000 of these two-dimensional strip membranes are assembled to form a fuel-cell stack; and in that the plates function as central plates (29) and as end plates (30, 31), all first or all last electrodes of one membrane side having contact with the respective zones (32) in each case, so that a redundant parallel circuit is created for each cell.

7. PEM fuel cell according to Claim 1, characterized in that from 2 to 2,000 strip membranes (17, 40) are arranged in parallel and form a two-dimensional strip membrane, the individual strip membranes of a two-dimensional membrane being connected to one another in series by separate electrically conductive connections (26); and in that from 2 to 2,000 of the two-dimensional membranes are assembled to form a fuel cell stack; and in that the plates function as central plates (29) and as end plates (30, 31), only the first or the last electrode of a membrane side having contact with the conductive zones (32).

8. PEM fuel cell according to at least one of Claims 1 to 7, characterized in that the plates (18, 19, 30, 31) consist of an electrically conductive base body in which electrically non-conductive zones are integrated at the corresponding locations.

9. PEM fuel cell according to Claim 8, characterized in that the non-conductive zones are applied by coating with a non-conductive material.

10. PEM fuel cell according to at least one of Claims 1 to 7, characterized in that the plates (18, 19, 30, 31) consist of a non-conductive base body and electrically conductive zones are integrated at the suitable locations.

11. PEM fuel cell according to Claim 10, characterized in that the conductive zones are applied by coating with a conductive material.

12. PEM fuel cell according to at least one of Claims 1 to 11, characterized in that the material for the electrically conductive zones (20, 32) for the plates is selected from graphite, metals, metal mixtures, alloys or electronically conductive polymers.

13. PEM fuel cell according to Claim 12, characterized in that the conductive polymers are either intrinsically conductive polymers or non-conductive polymers with electrically conductive additives.

14. PEM fuel cell according to Claim 13, characterized in that the additives are selected from electrically conductive powders, granules, flakes, pieces of fibre, fibres, networks or mats of metals, metal mixtures, alloys, graphite or carbon.

15. PEM fuel cell according to at least one of Claims 1 to 11, characterized in that the material for the electrically non-conductive zones (21, 33) is selected from ceramics, oxide compounds and plastics.

16. PEM fuel cell according to Claim 15, characterized in that the plastic are polysulphones or polyether ketones.

17. PEM fuel cell according to at least one of Claims 1 to 16, characterized in that the plates (18, 19, 29, 30, 31) have channels and/or cavities for the flow of coolant.

18. PEM fuel cell according to at least one of Claims 1 to 17, characterized in that seals (6) are arranged between the plates (18, 19, 29, 30, 31) and the strip membranes (17, 27, 28, 40).

19. PEM fuel cell according to at least one of Claims 1 to 18, characterized in that the strip membrane (17) consists of individual cells which are connected in stepped fashion with partial overlap of their electrode faces (11 to 13, 14 to 16).

20. PEM fuel cell according to at least one of Claims 1 to 18, characterized in that the strip membranes (40) consist of individual cells (41), the electrode face (44) of an individual cell (41) being in each case connected via a flat electronically conductive zone (43) to the electrode face (46) which belongs to the next individual cell (41) and is arranged on the other side of the membrane.

21. PEM fuel cell according to Claim 20, characterized in that a flat insulation zone (42) is arranged between the flat individual cells (41) and the flat electronically conductive zones (43).

## Revendications

1. Pile à combustible MEP, constituée d'au moins une membrane en bande (17, 40, 27, 28), qui présente au moins deux piles individuelles, au maximum 10 000 piles individuelles plates, chaque pile individuelle étant constituée d'une couche d'électrode (11 à 13, 14 à 16, 44, 46) appliquée des deux côtés d'une membrane (10, 23, 25) constituée d'un électrolyte polymère solide, les piles individuelles étant connectées en série et des plaques (18, 19, 29, 30, 31) en contact avec au moins une membrane en bande (17, 40, 27, 28) des deux côtés étant prévues, caractérisée en ce que les plaques (18, 19, 29, 30, 31) présentent des régions conductrices de l'électricité (20, 32) et des régions non conductrices (21, 33), en ce que ces régions sont dimensionnées de telle sorte qu'un court-circuit entre les électrodes individuelles d'une face de la membrane en bande (17, 40, 27, 28) soit évité et en ce que les plaques (18, 19, 29, 30, 31) présentent sur les faces tournées vers la membrane en bande (17, 40, 27, 28), autant dans les régions conductrices (20, 32) que dans les régions non conductrices (21, 33), des structures de distribution de combustible pour l'amenée et l'évacuation du combustible pour toutes les unités de piles de la membrane en bande.

2. Pile à combustible MEP selon la revendication 1, caractérisée en ce qu'une membrane en bande (17, 40) forme une membrane en bande unidimensionnelle et en ce que les plaques jouent le rôle de plaques d'extrémité (18, 19), respectivement seule la dernière ou la première électrode d'une face de la membrane ayant un contact avec la région conductrice (20).

3. Pile à combustible MEP selon la revendication 1, caractérisée en ce que 2 à 2000 membranes en bande (17, 40) sont agencées en parallèle et forment une membrane en bande bidimensionnelle, et en ce que les plaques jouent le rôle de plaques d'extrémité (18, 19), respectivement toutes les premières ou toutes les dernières électrodes d'une face de membrane ayant un contact avec les régions conductrices (20) de telle sorte que l'on obtienne un circuit parallèle redondant.

4. Pile à combustible MEP selon la revendication 1, caractérisée en ce que 2 à 2000 membranes en bande (17, 40) sont agencées en parallèle et forment une membrane en bande bidimensionnelle, les membranes en bande individuelles étant connectées en série l'une à l'autre par des connexions séparées conductrices de l'électricité (24), et en ce que les plaques jouent le rôle de plaques d'extrémité (18, 19), seule la première ou la dernière électrode d'une face de membrane ayant un contact avec les régions conductrices (20).

5. Pile à combustible MEP selon la revendication 1, caractérisée en ce que 2 à 2000 membranes en bande individuelles (17, 40) (membranes en bande unidimensionnelles) sont façonnées pour obtenir un empilage de piles à combustible, et en ce que les plaques jouent le rôle de plaques centrales (29) ainsi que de plaques d'extrémité (30, 31), seule la première ou la dernière électrode d'une face de membrane ayant un contact avec les régions conductrices (32).

6. Pile à combustible MEP selon la revendication 1, caractérisée en ce que 2 à 2000 membranes en bande (17, 40) sont agencées en parallèle et forment une membrane en bande bidimensionnelle, en ce que 2 à 2000 de ces membranes en bande bidimensionnelles sont élaborées pour former un empilage de piles à combustibles et en ce que les plaques jouent le rôle de plaques centrales (29) et de plaques d'extrémité (30, 31), respectivement toutes les premières ou toutes les dernières électrodes d'une face de membrane ayant un contact avec les régions conductrices (32) de telle sorte que l'on produise pour chaque pile un circuit parallèle redondant.

7. Pile à combustible MEP selon la revendication 1, caractérisée en ce que 2 à 2000 membranes en bande (17, 40) sont agencées en parallèle et forment une membrane en bande bidimensionnelle, les membranes en bande individuelles d'une membrane bidimensionnelle étant connectées en série les unes avec les autres par des connexions séparées conductrices de l'électricité (26), en ce que 2 à 2000 de ces membranes bidimensionnelles sont élaborées pour former un empilage de piles à combustible et en ce que les plaques jouent le rôle de plaques centrales (29) et de plaques d'extrémité (30, 31), seule la première ou la dernière électrode d'une face de membrane ayant un contact avec les régions conductrices (32).

8. Pile à combustible MEP selon au moins l'une des revendications 1 à 7, caractérisée en ce que les plaques (18, 19, 30, 31) sont constituées d'un corps de base conducteur de l'électricité, dans lequel des régions non conductrices de l'électricité sont intégrées aux points correspondants.

9. Pile à combustible MEP selon la revendication 8, caractérisée en ce que les régions non conductrices sont appliquées par revêtement par un matériau non conducteur.

10. Pile à combustible MEP selon - au moins l'une des revendications 1 à 7, caractérisée en ce que les plaques (18, 19, 30, 31) sont constituées d'un corps de base non conducteur et des régions conductrices de l'électricité sont intégrées en des points appropriés.

11. Pile à combustible MEP selon la revendication 10, caractérisée en ce que les régions conductrices sont appliquées par revêtement par un matériau conducteur.

12. Pile à combustible MEP selon au moins l'une des revendications 1 à 11, caractérisée en ce que le matériau pour les régions conductrices de l'électricité (20, 32) pour les plaques est choisi parmi le graphite, les métaux, les mélanges de métaux, les alliages ou les polymères conducteurs d'électrons.

13. Pile à combustible MEP selon la revendication 12, caractérisée en ce que les polymères conducteurs sont des polymères à conduction intrinsèque ou des polymères non conducteurs contenant des substances d'appoint conductrices de l'électricité.

14. Pile à combustible MEP selon la revendication 13, caractérisée en ce que les substances d'appoint sont choisies parmi les poudres, les granulats, les flocons, les fragments de fibres, les fibres, les réseaux ou les mats de métaux, des mélanges métalliques, des alliages, du graphite ou du carbone qui conduisent l'électricité.

15. Pile à combustible MEP selon au moins une des revendications 1 à 11, caractérisée en ce que le matériau pour les régions non conductrices de l'électricité (21, 33) est choisi parmi les céramiques, les composés oxydés et les matières plastiques.

16. Pile à combustible MEP selon la revendication 15, caractérisée en ce que les matières plastiques sont des polysulfones ou des polyéthercétones.

17. Pile à combustible MEP selon au moins l'une des revendications 1 à 16, caractérisée en ce que les plaques (18, 19, 29, 30, 31) présentent des canaux et/ou des espaces creux pour faire passer le réfrigérant.

18. Pile à combustible MEP selon au moins l'une des revendications 1 à 17, caractérisée en ce que des garnitures d'étanchéité (6) sont agencées entre les plaques (18, 19, 29, 30, 31) et les membranes en bande (17, 27, 28, 40).

19. Pile à combustible MEP selon au mois l'une des revendications 1 à 18, caractérisée en ce que la membrane en bande (17) est constituée de piles individuelles qui sont connectées en escalier par chevauchement partiel de leur surfaces d'électrodes (11 à 13, 14 à 16).

20. Pile à combustible MEP selon au moins l'une des revendications 1 à 18, caractérisée en ce que la membrane en bande (40) est constituée de piles individuelles (41), respectivement une surface d'électrode (44) d'une pile individuelle (41) étant connectée à la surface d'électrode (46) agencée sur l'autre face de la membrane de la pile individuelle suivante (41) via une région plate conductrice d'électrons (43).

21. Pile à combustible MEP selon la revendication 20, caractérisée en ce qu'une région isolante plate (42) est agencée entre les piles individuelles plates (41) et les régions conductrices d'électrons plates (43).
